**Europäisches Patentamt**

(19) **European Patent Office**

**Office européen des brevets**

(11) Publication number: **0 051 427**
**A1**

(12) # EUROPEAN PATENT APPLICATION

(21) Application number: **81305074.7**

(22) Date of filing: **27.10.81**

(51) Int. Cl.³: **G 07 F 17/34**
**G 01 D 5/16**

(30) Priority: **30.10.80 GB 8034897**

(43) Date of publication of application:
**12.05.82 Bulletin 82/19**

(84) Designated Contracting States:
**AT BE CH DE FR LI NL SE**

(71) Applicant: **BALLY MANUFACTURING CORPORATION**
**2640 Belmont Avenue**
**Chicago Illinois 60618(US)**

(72) Inventor: **Keane, Martin A.**
**1322 South Chestnut**
**Arlington Heights Illinois 60005(US)**

(72) Inventor: **Burnside, Walter M.**
**2801 Bryant**
**Las Vegas Nevada 89102(US)**

(74) Representative: **Cross, Rupert Edward Blount et al,**
**BOULT, WADE & TENNANT 27 Furnival Street**
**London EC4A 1PQ(GB)**

(54) **Ratio encoder for slot machine reels.**

(57) A ratio encoder encodes the instantaneous angular position of one or more spinning reels (10) in a microprocessor controlled amusement game such as a fruit machine. The ratio encoder provides substantially instantaneous angular position data to the microprocessor by measuring the ratio of two voltages generated by electrical resistance (11) on the reel's periphery. One of the voltages may be a reference voltage, the other may be substantially proportional to the displacement of a point on the reel's periphery from a spatially fixed reference point (15). The ratio may be obtained as a voltage, converted to digital form by an analogue/digital converter (23) and then supplied to the microprocessor as input data.

EP 0 051 427 A1

-1-

## RATIO ENCODER FOR SLOT MACHINE REELS

This invention relates to rotary potentiometers for encoding the instantaneous angular positions of spinning reels in amusement games including fruit machines, sometimes known as slot machines. More particularly, the invention relates to devices for providing instantaneous position information in the form of digital data input to a microprocessor controlling an amusement game by measurement of a voltage ratio rather than an absolute voltage.

In a microprocessor controlled fruit machine, for example, the microprocessor may be required to stop each of a plurality of spinning reels at a preselected position. The positions could be determined by microprocessor calculations conforming with particular rules governing the course of play. When the reels are stopped at the preselected positions there will be a preselected array of fruit symbols displayed on a win line. The present invention, therefore, provides such a microprocessor with the current position of each spinning reel. The microprocessor utilize the position information to issue "stop" instructions in order to stop each reel at its predesignated position.

An example of a fruit machine feature for which the present invention can sense position information for a microprocessor is found in Bally Mfg. Co.'s co-pending application entitled "Swap Feature for Fruit Machines," British Application No. 8026094. The invention may also be used to solve other sensing and control problems in gaming machines or amusement games.

Fruit machines are presently known in which electrical means are utilized to sense the angular position of a reel after the reel has stopped spinning. British Patent No. 1,423,415, for example, issued to New

Century Novelty Company, Pty. Ltd. discloses a fruit
machine reel having a resistor with two contact points
adjacent to each symbol on a fruit machine reel. The
resistance value of the resistor encodes the particular
symbol displayed. A pair of wipers connected to a voltage source then identifies the particular symbol displayed by measuring the resistance adjacent to that symbol. The identification is used to determine whether
the combination of stopped reels is entitled to a pay-
off.

The art exemplified by the New Century Novelty
Company patent is not used for reel time microprocessor
control.

Rotary potentiometers have been used to indicate continuously the angular position of a rotatable
shaft. British Patent No. 1,297,111 issued to Jones,
for example, discusses the use of a rotary potentiometer
for indicating the wind direction. The output of the
rotary potentiometer can be fed to a simple galvanometer
which, in turn, can drive a pen on a moving strip
chart. Rotary potentiometers have not, however, been
previously used in amusement games as sensing elements
for microprocessors.

Bally Mfg. Co.'s co-pending application entitled "Analogue Encoder for Slot Machine Reels," Application No. 8026093 utilizes a rotary potentiometer for
sensing the substantially instantaneous position of a
rotating reel in an amusement game. The output voltage
of the potentiometer is converted to a digital signal by
an analogue/digital converter and then used as input
data for the controlling microprocessor.

The principles described in the co-pending
application were embodied in systems that measured absolute electrical quantities. For example, in a reel having uniform resistance around the periphery, a constant current could be input at a fixed point on the reel's periphery and output at a point fixed in space. The voltage drop between the two points is then proportional to the resistance along the periphery between the two points and, hence, to the reel's angular position.

The present invention, in contrast, envisions the measurement of ratios of electrical quantities as indicators of reel angular position, rather than the values of the quantities themselves. Ratio measurements have inherent advantages which are realizable within the scope of this invention. For example, the value of resistance per unit length around the reel's periphery is unimportant if voltage ratios are measured. All that is needed is that the resistance be uniform on each reel. As a consequence, substantial manufacturing economies may be realized by utilizing ratio measurements.

Also, by utilizing ratio measurements one makes the measurement substantially independent of supply voltage or supply current fluctuations. Such independence will become evident in the following description of a preferred embodiment utilizing the principles of the present invention.

In one embodiment of the invention the periphery of the spinning reel will comprise a conductor containing resistance such that the resistance between any two points on the reel is proportional to the angular displacement separating the two points as measured from the centre of the reel. In this embodiment a first reference point on the reel is connected to a potential source fixed at a voltage with respect to earth through a first slip-ring. A fixed terminal which is earthed contacts the periphery of the reel at a point fixed in space so that the angular displacement between the fixed

-4-

terminal and the reference point on the reel increases in time at a rate proportional to the angular velocity of the reel. An opening may be made in the conductor containing resistance to provide an open circuit in the conducting path on the reel's periphery. The open circuit may be provided on one side of, and adjacent to the first reference point; the angle from the other side of the first reference point to a second reference point then becomes a fixed reference angle. The second reference point connects to a second slip-ring. The ratio of the fixed voltage to the voltage difference between slip-rings will then equal the ratio of the angular displace- ment to the angular separation between reference points. The voltage difference between slip-rings and the fixed voltage may then be fed to an analogue/digital converter whose output becomes the input to the control- ling microprocessor. The reference voltage to the ana- logue/digital converter may be just the voltage from the potential source. The input to the microprocessor will then be the aforementioned ratio.

The implementation of the embodiment is not limited to detection of positions of a single wheel. Positions of several wheels may be determined by use of multiple techniques. In a complete machine, for example, the microcomputer could monitor the angular positions of several wheels simultaneously and then issue stop instructions to means controlling the rotation of each of the several wheels according to a program contained in the microprocessor.

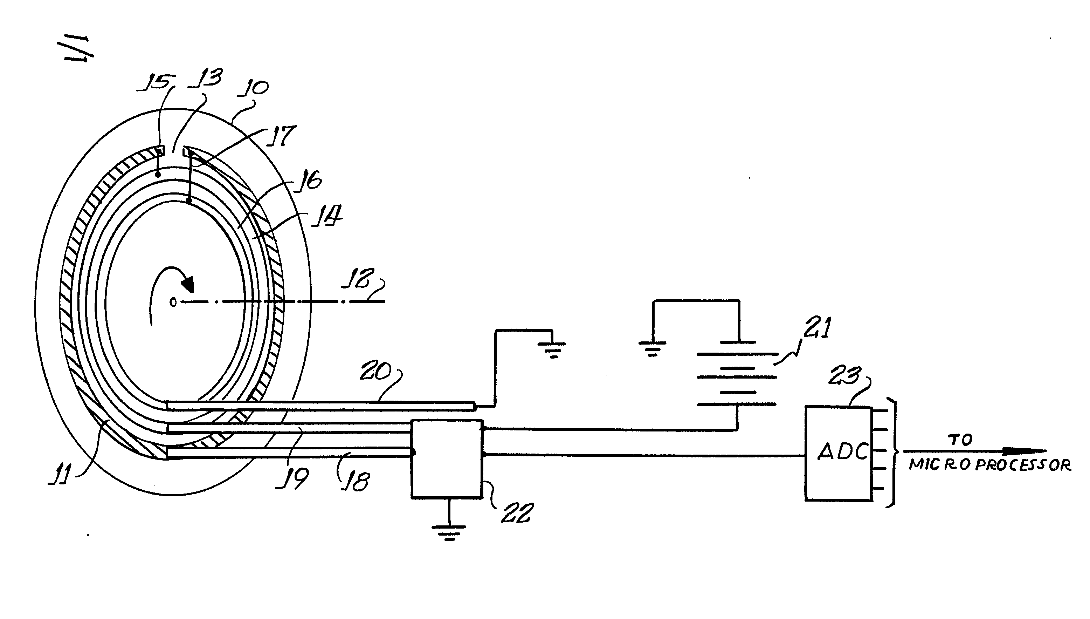

Examples of the invention will now be described with reference to the accompanying drawings in which FIGURE 1 illustrates an embodiment of the invention.

In FIGURE 1 a reel of a gaming machine is illustrated generally at 10. The reel 10 may comprise

-5-

one of the indicating reels of a fruit machine, for example. The reel 10 has a resistive track 11 extending about the axis 12 of rotation of the reel. The track 11 is circular centered on the axis 12 and is continuous apart from a break 13. Immediately adjacent one side of the break 13, the track 11 is electrically connected to a first continuous circular conductive slip-ring 14 having a low resistance by a contact 15 slideably connected to the slip-ring 14. On the other side of the break 13 the track 11 is electrically connected to a second slip-ring 16 by a contact 17 slideably connected to the slip-ring 16. The angular displacement between the contact 15 and 17 is thereby substantially $360^{\circ}$ as measured along the electrically connected portion of track 11. Typically the rings 14 and 16 may be of copper. Electrical contacts are made to the track 11 and the slip-rings 14 and 16 by means of brushes 18, 19, and 20, respectively. The three brushes are fixed in space. As a result the point of contact between the brush 18 and the track 11 is dependent on the angular position of the reel 10. However, because of the low resistance of the rings 14 and 16 direct electrical contact is effectively made between the brush 19 and the contact 15 near one end of the track 11.

Effectively direct electrical contact is made through slip-ring 16 between the brush 20 and the contact 17 on the other side of the break from contact 15.

The track 11 has a constant resistance per unit angular displacement about the axis 12 so that the resistance between any two points along the track 11 is dependent on their angular separation. Accordingly, it can be seen that the resistance between the brushes 18 and 19 is dependent on the angular position of the reel 10, whereas the resistance between the brushes 19 and 20

-6-

is essentially fixed. A voltage source 21 establishes a fixed voltage between the brush 19 and brush 20, the latter being connected to earth. The fixed voltage thereby establishes a reference voltage between the two edges of the break 13.

The angular distance between the contact point of the brush 19 on the track 11 and the break 13 may now be determined by voltage ratio measurements. The ratio of the voltage (with respect to earth) on brush 18 to the voltage source voltage on brush 19 is substantially equal to the angular distance in question. The ratio of voltages may be conveniently measured with a voltage ratio meter 22 and the output fed to an analog-to-digital converter 23. The digital output may then be utlised by the controlling microprocessor.

CLAIMS:

1. In a gaming device utilizing one or more reels that spin and then stop under control of a microprocessor and its associated memory, apparatus for transmitting to the microprocessor the instantaneous position of each reel with respect to a spatially fixed point by generating a pair of voltages having a ratio uniquely dependent upon the instantaneous angular position of the reel, and apparatus responsive to the ratio of the voltages which outputs a digital signal substantially indicative of said ratio, said digital signal capable of being read and acted upon by the microprocessor and stored in the microprocessor memory.

2. A gaming machine having at least one reel rotatable about an axis and measurement means to measure the angular position of the reel, said measurement means comprising electrical resistance means on the reel providing angularly distributed electrical resistance extending substantially completely around the periphery of the reel; at least a triad of contact means to make electrical contact with said resistance means, at least one of said contact means contacting said electrical resistance at a contact point fixed in space, thereby causing the location of said contact point on said resistance means and the resistance between at least one pair of contact means to depend upon the angular position of the reel; and means to generate a digital signal substantially proportional to the ratio of the resistance between said pair of contact points to a substantially fixed reference resistance between a second pair of contact points.

3. A gaming machine as claimed in Claim 2 wherein a first contact means makes contact at a point

-8-

fixed in space and a second and a third contact means make contact at different fixed reference points on said resistance means, the ratio of the voltage between the first and second contact means to the voltage between the second and third contact means being proportional to the angular displacement between the first and second contact means.

4. A gaming machine as claimed in Claims 2 or 3 wherein the resistance means is a continuous resistive track.

REC/jh/EA 481

0051427

0051427

## DOCUMENTS CONSIDERED TO BE RELEVANT

| Category | Citation of document with indication, where appropriate, of relevant passages | Relevant to claim |
|---|---|---|
| DY | GB - A - 1 423 415 (NEW CENTURY NOVELTY) <br><br> * Claims; page 2, line 117 to page 3, line 2 * | 1,2 |
| | -- | |
| Y | ELECTRONICS, vol. 52, no. 15 July 19, 1979 J. GOSCH: "C-MOS switches, bi-FET op.amps help shaft-angle encoder cover full 360°",pages 70,71 <br><br> * Complete article * | 1-4 |
| | -- | |
| A | GB - A - 2 035 648 (SUREVILLE) <br> * Abstract; figures; page 3, lines 41-107 * | 1,2 |
| | -- | |
| A | GB - A - 1 550 744 (ALCA ELECTRONICS) <br><br> * Figures; page 4, line 66 to page 5, line 61 * | 1,2 |
| | -- | |
| A | GB - A - 1 550 732 (PBR ELECTRONIC DESIGN) <br><br> * Claims; figures * | 1,2 |
| | -- | |
| A | US - A - 4 095 795 (J.C. SAXTON) <br><br> * Abstract; figures; column 2, line 29 to column 4, line 22; column 6, line 38 to column 10, line 7 * | 1,2 |
| | ---- | |

**CLASSIFICATION OF THE APPLICATION (Int. Cl. 3)**

G 07 F 17/34
G 01 D 5/16

**TECHNICAL FIELDS SEARCHED (Int.Cl.3)**

G 07 F 17/34
       17/32
G 01 D 5/16
G 06 F 5/44

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 05-02-1982 | DAVID |

EPO Form 1503.1 06.78